# EUROPEAN PATENT SPECIFICATION

(11) **EP 4 462 405 B1**
(45) Date of publication and mention of the grant of the patent: **11.03.2026**
(21) Application number: 23737140.6
(22) Date of filing: 06.01.2023
(51) Int. Cl.: G08G 1/14, G08G 1/0968, B60W 40/02, B60W 50/14, B62D 15/02

(54) **VEHICLE DRIVING ASSISTANCE CONTROL METHOD AND APPARATUS, AND VEHICLE AND STORAGE MEDIUM**
VERFAHREN UND VORRICHTUNG ZUR STEUERUNG DER FAHRZEUGFAHRASSISTENZ SOWIE FAHRZEUG UND SPEICHERMEDIUM
PROCÉDÉ ET APPAREIL DE COMMANDE D'AIDE À LA CONDUITE DE VÉHICULE, ET VÉHICULE ET SUPPORT DE STOCKAGE

(30) Priority: 07.01.2022 CN 202210018120
(43) Date of publication of application: 13.11.2024
(73) Proprietor: Great Wall Motor Company Limited, Hebei 071000 (CN)
(72) Inventor: ZHU, Guoshan, Baoding, Hebei 071000 (CN); DU, Xiongfei, Baoding, Hebei 071000 (CN); LUO, Yuqi, Baoding, Hebei 071000 (CN); ZHANG, Qi, Baoding, Hebei 071000 (CN); ZHAO, Zhixiang, Baoding, Hebei 071000 (CN)
(74) Representative: Klunker IP Patentanwälte PartG mbB
(86) International application number: PCT/CN2023/070930
(87) International publication number: WO 2023/131278

(56) References cited:
- CN-A- 101 916 495
- CN-A- 107 200 022
- CN-A- 107 248 315
- CN-A- 111 627 131
- CN-A- 113 345 204
- CN-A- 113 345 204
- CN-A- 115 116 260
- US-A1- 2015 239 477
- US-A1- 2015 367 789

## Description

### TECHNICAL FIELD

The present invention relates to the field of vehicle technology, and in particular, to a driver-assistance control method and apparatus for a vehicle, a vehicle, and a storage medium.

### BACKGROUND

Fatigue driving refers to the physiological and psychological disorders of drivers after a long period of continuous driving, which objectively leads to a decline in driving skills and easily causes traffic accidents. During the driving process, when the driver is tired and needs to take a rest, the vehicle control system will show a recommended parking location for the driver to rest.

However, the parking location recommended by the vehicle control system may have the problem of complex environment, resulting in the driver not being able to rest comfortably, or there may be potential safety hazards.

US 2015/367789 A1 discloses to methods and systems for controlling operation of a vehicle apparatus, such as windows and doors, from a rear seat of the vehicle based at least in part on the detection of occupants in the rear seat. To this effect, the method comprises detecting, using a sensor, information indicative of a dependent individual occupying a rear seat of a vehicle, and preventing control of an apparatus of the vehicle from the rear seat when the information is detected. A corresponding vehicle includes a body defining an interior of the vehicle, a front seat disposed within the interior, a rear seat disposed within the interior behind the front seat, an apparatus providing for exit from the vehicle, and a control system. The apparatus is selected from the group consisting of: a window of the vehicle, a door of the vehicle, and a seat of the vehicle. The control system comprises a sensor and a processor. The sensor is configured to detect information indicative of a dependent individual occupying the rear seat. The processor is coupled to the sensor, and is configured to prevent control of the apparatus from the rear seat when the information is detected.

US 2015/239477 A1 discloses an on-board system utilized in a vehicle, the on-board system includes at least one execution unit, an information acquiring section, a state determination section, a position specifying section, a searching section, and an execution unit control section. The at least one execution unit executes an operation for eliminating an inattentive state or a drowsy state of a driver of a vehicle. The information acquiring section acquires driver state information indicating a state of the driver. The state determination section determines whether the driver is in the inattentive state or in the drowsy state based on the driver state information. The position specifying section specifies a present position of the vehicle. The searching section searches for a resting place at which the driver can have a rest based on the present position of the vehicle and information stored in a resting place database when the state determination section determines that the driver is in the inattentive state or in the drowsy state. The information stored in the resting place database is related to places at which the driver can have a rest. The execution unit control section calculates a necessary travel time required for the vehicle to travel from the present position to the resting place. The execution unit control section activates at least one target execution unit to start an operation when the necessary travel time is equal to or longer than a threshold period that is preliminarily determined. The at least one target execution unit being a part of the at least one execution unit.

### SUMMARY OF THE INVENTION

### TECHNICAL PROBLEMS

An objective of the present invention is to provide a driver-assistance control method and apparatus for a vehicle, a vehicle and a storage medium, which can solve the problem that the parking position recommended by the vehicle control system is not suitable for the driver to rest when the driver needs to take a rest.

### TECHNICAL SOLUTIONS

The object is achieved regarding the driver-assistance control method and apparatus, respectively, for a vehicle with the features of the independent claims 1 and 10, respectively, regarding the vehicle with the features of the independent claim 11 and regarding the storage medium with the features of the independent claim 12. Further embodiments are defined in the dependent claims.

### ADVANTAGEOUS EFFECTS

The advantageous effects of the driver-assistance control method for a vehicle provided by the present invention are that: when a rest instruction is received, it indicates that the driver needs to take a rest. At this moment, a target parking position is determined according to the data of the navigation system on the vehicle, and the driver can drive the vehicle to the target parking position. When the distance between the vehicle and the target parking position is less than the preset distance, the number of vehicles passing the target parking position is counted within the first preset time, and the traffic volume at the target parking position is detected before the vehicle reaches the target parking position. When the number of vehicles passing the target parking position within the first preset time is less than the first preset value, it indicates that the traffic volume at the target parking position is small, and the driver is less likely to be disturbed when resting. When the vehicle is parked at the target parking position, the vehicle is controlled to enter a driver rest mode, and the driver can rest comfortably and safely.

It can be understood that the advantageous effects of the corresponding apparatus, the vehicle and the storage medium mentioned above can be referred to the relevant description of the above-mentioned driver-assistance control method for a vehicle, and will not be repeated herein.

### DESCRIPTION OF THE DRAWINGS

In order to more clearly illustrate the technical solutions of the present invention, the drawings used in the description of the invention or the exemplary technologies will be briefly introduced below.
FIG. 1 is a flow chart of a driver-assistance control method for a vehicle;
FIG. 2 is a flow chart of a driver-assistance control method for a vehicle;
FIG. 3 is a schematic diagram of the structure of a driver-assistance control apparatus for a vehicle; and
FIG. 4 is a schematic diagram of the structure of a vehicle.

### EMBODIMENTS OF THE INVENTION

In the following description, specific details such as specific system structures, technologies, and the like are provided for the purpose of explanation rather than limitation, so as to provide a thorough understanding of the present invention. In other cases, detailed descriptions of well-known systems, devices, circuits, and methods are omitted to prevent unnecessary details from obstructing the description.

It should be understood that when used in the present description and the appended claims, the term "comprises" indicates the presence of described features, integrals, steps, operations, elements and/or components, but does not exclude the presence or addition of one or more other features, integrals, steps, operations, elements, components and/or combinations thereof.

It should also be understood that the term "and/or" used in the present description and appended claims refers to and includes any and all possible combinations of one or more of the associated listed items.

As used in the present description and appended claims, the term "if" may be interpreted as "when" or "once" or "in response to determining" or "in response to detecting", depending on the context. Similarly, the phrase "if determined" or "if [described condition or event] is detected" may be interpreted as meaning "once determined" or "in response to determining" or "once [described condition or event] is detected" or "in response to detecting [described condition or event]", depending on the context.

In addition, in the description, the terms "first", "second", "third", and the like are only used to distinguish the descriptions and cannot be understood as indicating or implying relative importance.

The terms "including", "comprising", "having" and variations thereof all mean "including but not limited to", unless otherwise specifically emphasized.

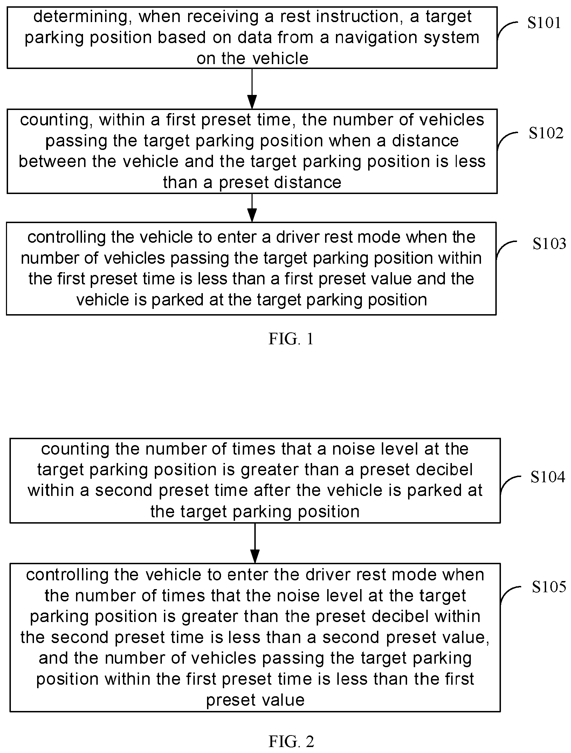

FIG. 1 shows a schematic flow chart of a driver-assistance control method for a vehicle. Referring to FIG. 1, the driver-assistance control method for a vehicle includes the following steps S101 to S103.

In step S101, a target parking position is determined according to data from a navigation system on the vehicle when a rest instruction is received.

Specifically, if the driver becomes fatigued while driving the vehicle, the driver may send a rest instruction to the processor on the vehicle by voice or by operating buttons. When the processor receives the rest instruction, a target parking position is determined based on the data from the navigation system on the vehicle, and the determined target parking position is the position closest to the current position of the vehicle. After the target parking position is determined, the navigation system on the vehicle automatically plans a route to the target parking position so that the driver can drive the vehicle to the target parking position.

In step S102: the number of vehicles passing the target parking position within a first preset time is counted when the distance between the vehicle and the target parking position is less than a preset distance.

Specifically, after the target parking position is determined, the driver drives the vehicle to the target parking position. When the distance between the vehicle and the target parking position is less than a preset distance, the number of vehicles passing the target parking position is counted within the first preset time, and the traffic volume at the target parking position is detected in advance to determine whether the target parking position is suitable for the driver to rest. The number of vehicles passing the target parking position may be detected by the navigation system on the vehicle. Compared with detecting the traffic volume after the vehicle stops at the target parking position, detecting the traffic volume of the target parking position in advance can enable the driver to know in advance whether the target parking position meets their rest requirements. If the target parking position meets the rest requirements, the driver can quickly enter the rest state after parking the vehicle at the target parking position; if the target parking position does not meet the rest requirements, a new target parking position can be found in advance.

It should be noted that the first preset time may be set according to actual conditions, for example, the preset time is set to 3 minutes, 5 minutes, 10 minutes, or the like. The preset distance may be set according to actual conditions, for example, the preset distance is set to 0.5 km, 1 km, 2 km, or the like.

In step S103, the vehicle is controlled to enter a driver rest mode when the number of vehicles passing the target parking position within the first preset time is less than a first preset value, and the vehicle is parked at the target parking position.

Specifically, when the number of vehicles passing the target parking position within the first preset time is less than the first preset value, it means that the traffic volume at the target parking position is low, and the driver is less likely to be disturbed when resting. After the vehicle is parked at the target parking position, the vehicle is controlled to enter the driver rest mode, and the driver can rest comfortably and safely.

When the number of vehicles passing the target parking position within the first preset time is greater than or equal to the first preset value, it means that the traffic volume at the target parking position is high, and the driver taking rest at this position will be disturbed and unsafe. In this case, the vehicle processor will send an alarm message to remind the driver to change the parking position, re-determine the target parking position according to the data in the navigation system on the vehicle, and plan a new route to another target parking position so that the driver can go to a new target parking position.

When the number of vehicles passing the target parking position within the first preset time is less than the first preset value, it indicates that the traffic volume at the target parking position is low, which can improve the safety of the driver when taking a rest.

However, the noise at the target parking position will directly affect the comfort of the driver when resting. If the noise at the target parking position is too loud, the driver will not be able to rest comfortably. The best target parking position should be able to ensure both the safety and comfort of the driver when resting. Therefore, after completing the detection of the traffic volume at the target parking position, it is necessary to detect the noise level at the target parking position to further determine whether the location is suitable for the driver to rest.

FIG. 2 shows a schematic flow chart of a driver-assistance control method for a vehicle. Referring to FIG. 2, the driver-assistance control method for a vehicle may further include step S104 and step S105.

In step S104, after the vehicle stops at the target parking position, the number of times the noise level at the target parking position is greater than a preset decibel is counted within a second preset time.

Specifically, after the vehicle stops at the target parking position, the number of times the noise level at the target parking position is greater than the preset decibel is counted within the second preset time. The noise level may be collected by a sound collector inside the vehicle. Noises at the preset decibel will affect the normal rest of the driver, and the preset decibel may be set according to actual needs.

It should be noted that the second preset time may be set according to actual conditions, for example, the preset time may be set to 1 minute, 2 minutes, 5 minutes, or the like.

In step S105, when the number of times that the noise level at the target parking position is greater than the preset decibel within the second preset time is less than a second preset value, and the number of vehicles passing the target parking position within the first preset time is less than the first preset value, the vehicle is controlled to enter the driver rest mode.

Specifically, when the number of times that the noise level at the target parking position is greater than the preset decibel within the second preset time is less than the second preset value, it means that the noise at the target parking position is relatively low and will not affect the driver when resting, or has a small impact on the driver when resting. When the number of times that the noise level at the target parking position is greater than the preset decibel within the second preset time is less than the second preset value, and the number of vehicles passing the target parking position within the first preset time is less than the first preset value, it means that the traffic volume at the target parking position is low and quiet, which is suitable for the driver to rest. Accordingly, the vehicle is controlled to enter the driver rest mode, and the driver can rest comfortably.

If the number of times that the noise level of the target parking position is greater than the preset decibel within the second preset time is greater than or equal to the second preset value, it indicates that the noise at the target parking position is relatively large and will affect the driver's rest. As a result, the target parking position is re-determined according to the data from the vehicle navigation system, and a new route to another target parking position is planned so that the driver can go to the new target parking position.

When the traffic volume and noise level at the target parking position meet the conditions, the driver can take a rest at the target parking position. In order to improve the comfort of the driver when resting, the environment where the driver is located needs to be controlled so as to further improve the comfort of the driver.

Therefore, controlling the vehicle to enter the driver rest mode in step S103 includes step S1031 and step S1032.

In step S1031, the temperature, humidity, and oxygen concentration in the vehicle compartment are measured.

Specifically, the temperature sensor in the vehicle compartment may collect the temperature data and transmit the collected temperature to the processor on the vehicle. The humidity sensor in the vehicle compartment can collect humidity data and transmit the collected humidity to the processor on the vehicle. The oxygen concentration sensor in the vehicle compartment can collect oxygen concentration and transmit the collected oxygen concentration to the processor on the vehicle. Thus, the processor on the vehicle completes the acquisition of the temperature, humidity and oxygen concentration in the vehicle.

In step S1032, according to the temperature, humidity and oxygen concentration, an air-conditioning system is controlled to operate so that the temperature is within a preset temperature range, the humidity is within a preset humidity range, and the oxygen concentration is within a preset concentration range.

Specifically, after the processor on the vehicle obtains the temperature, humidity and oxygen concentration inside the vehicle, it controls the operation of the air-conditioning system and regulates the temperature, humidity and oxygen concentration inside the vehicle so that the temperature is within the preset temperature range, the humidity is within the preset humidity range, and the oxygen concentration is within the preset concentration range, thereby improving the comfort of the environment for the driver to rest.

When the driver is taking a rest, moving objects around the target parking position may collide with the vehicle, which may cause safety hazards to the personal safety or property safety of the driver. When the driver is taking a rest, objects around the vehicle are monitored to improve the safety of the personal and property safety of the driver. Therefore, controlling the vehicle to enter the driver rest mode in step S103 includes steps S1033 to S1035.

In step S1033, image information, speed information and movement direction information of objects around the vehicle are acquired.

Specifically, when the driver starts to rest, the camera on the vehicle can collect image information of objects around the vehicle, and the radar on the vehicle can collect speed information and movement direction information of the objects around the vehicle.

In step S1033, it is determined whether the object has a risk of colliding with the vehicle based on the image information, speed information and movement direction information.

Specifically, by analyzing the image information of the object, the type of the object can be known, for example, whether the object is a car, a bicycle, or a truck. The moving trajectory of the object may be analyzed by the speed information and movement direction information of the object. Combining the image information, speed information and movement direction information of the object, it can be analyzed whether the object has a risk of colliding with the vehicle.

For example, when the object is a truck, and the truck is traveling toward the target parking position and the driving speed is too fast (for example, 50 km/h), it is determined that the truck may collide with the vehicle.

In step S1033, when it is determined that the object has a risk of colliding with the vehicle, an alarm message is sent.

Specifically, when it is determined that an object has a risk of colliding with the vehicle, the alarm on the vehicle is controlled to send an alarm message to remind the driver who is taking a rest, so that the driver can take measures in advance to prevent the danger of a collision and ensure the safety of the driver.

In addition, the image information of objects around the vehicle is collected to achieve the monitoring function. When the processor determines that the vehicle is in a stolen state through image information analysis, the alarm is controlled to send an alarm message to remind the driver, which can prevent robbery. When robbery occurs, evidence can be found in the stored image information, facilitating the police to solve the case in time.

In one embodiment of the present application, after step S103, the method further includes steps S106 to S108.

In step S106, a preset sleep time is obtained.

Specifically, the preset sleep time may be set according to the actual needs of the driver, and the driver may set the preset sleep time by voice or by operating the control panel.

In addition, when the vehicle enters the driver rest mode, the parking lights on the vehicle are controlled to light up, which can warn passing vehicles, prevent passing vehicles from colliding with the vehicle, and improve the safety of the driver when resting.

In step S107, when the vehicle enters the driver rest mode, the duration of the vehicle being in the driver rest mode is timed.

In step S108, when the duration of the vehicle in the driver rest mode reaches a preset sleep time, a wake-up message is sent to wake up the driver.

Specifically, the driver can set a preset sleep time for an automatic wake-up function for the driver, thereby preventing the driver from oversleeping and improving the intelligence of the vehicle for the driver to rest.

When the traffic volume and noise at the target parking position meet the requirements, the safety and comfort of the driver can be improved when resting. However, accidents cannot be guaranteed when the driver is resting. Therefore, when the vehicle enters the driver rest mode, the vehicle location information and vehicle status information are sent to a preset contact.

Specifically, the preset contact may be a relative or friend of the driver, and the preset contact will know the driver's current location and vehicle status through the vehicle location information and vehicle status information. When the driver encounters an accident, the preset contact can quickly locate the driver through the vehicle location information and vehicle status information, so as to provide timely rescue to the driver.

It should be understood that the size of the serial numbers of the steps in the above embodiments does not mean the order of execution. The execution order of each process should be determined by its function and internal logic, and should not constitute any limitation on the implementation process of the embodiments of the present application.

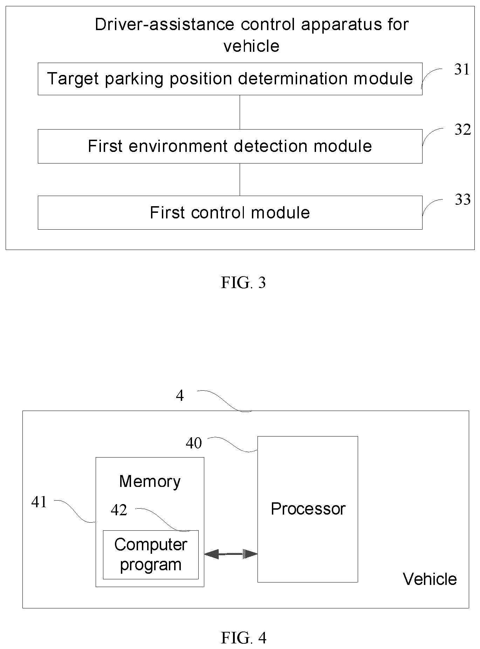

FIG. 3 shows a schematic diagram of the structure of a driver-assistance control apparatus for a vehicle provided in an embodiment of the present application. Referring to FIG. 3, the driver-assistance control apparatus for a vehicle includes:
a target parking position determination module 31, configured to determine the target parking position according to data from a navigation system on the vehicle when receiving a rest instruction;
a first environment detection module 32, configured to count the number of vehicles passing the target parking position within a first preset time when a distance between the vehicle and the target parking position is less than a preset distance; and
a first control module 33, configured to control the vehicle to enter a driver rest mode when the number of vehicles passing the target parking position within the first preset time is less than a first preset value and the vehicle is parked at the target parking position.

In one embodiment of the present application, the driver-assistance control apparatus for a vehicle further includes:
a second control module configured to redetermine the target parking position according to the data from the navigation system on the vehicle when the number of vehicles passing the target parking position within the first preset time is greater than or equal to the first preset value.

In one embodiment of the present application, the driver-assistance control apparatus for a vehicle further includes:
a second environment detection module configured to count the number of times that noise level at the target parking position is greater than a preset decibel within a second preset time after the vehicle is parked at the target parking position; and
a third control module configured to control the vehicle to enter a driver rest mode when the number of times the noise level at the target parking position is greater than the preset decibel within the second preset time is less than a second preset value, and the number of vehicles passing the target parking position within the first preset time is less than the first preset value.

In one embodiment of the present application, the first control module 33 is further configured to:
obtain the temperature, humidity and oxygen concentration in a vehicle compartment; and
the air-conditioning system is controlled to operate, according to the temperature, the humidity and the oxygen concentration, so that the temperature is within a preset temperature range, the humidity is within a preset humidity range, and the oxygen concentration is within a preset concentration range.

In one embodiment of the present application, the first control module 33 is further configured to:
acquire an image information, a speed information, and a movement direction information of an object around the vehicle;
determine, based on the image information, the speed information, and the movement direction information, whether the object has a risk of colliding with the vehicle; and
send an alarm message when the object is determined to have a risk of colliding with the vehicle.

In one embodiment of the present application, the driver-assistance control apparatus for a vehicle further includes:
a preset sleep time acquisition module configured to acquire the preset sleep time;
a timing module, configured to time a duration of the vehicle being in the driver rest mode after the vehicle enters the driver rest mode;
a wake-up module configured to send a wake-up message to wake up the driver when the duration of the vehicle being in the driver rest mode reaches the preset sleep time.

In one embodiment of the present application, the driver-assistance control apparatus for a vehicle further includes:
an information sending module configured to send vehicle location information and vehicle status information to a preset contact.

It is clear to those skilled in the art that, for the ease description and brevity, only the division of the above-mentioned functional units and modules is used as an example for illustration. In practical applications, the above-mentioned function allocation can be completed by different functional units and modules as needed, that is, the internal structure of the device can be divided into different functional units or modules to complete all or part of the functions described above. The functional units and modules in the embodiment can be integrated into a processing unit, or each unit can exist physically separately, or two or more units can be integrated into one unit. The above-mentioned integrated unit can be implemented in the form of hardware or in the form of software functional units. In addition, the specific names of the functional units and modules are only for the convenience of distinguishing each other, and are not intended to limit the scope of protection of this application. The specific working process of the units and modules in the above-mentioned system can be referred to the corresponding process in the aforementioned method embodiments, which will not be repeated herein.

FIG. 4 is a schematic diagram of the structure of a vehicle. As shown in FIG. 4, the vehicle 4 includes: at least one processor 40 (only one processor 40 is shown in FIG. 4), a memory 41, and a computer program 42 stored in the memory 41 and executable on the at least one processor 40. When the processor 40 executes the computer program 42, the steps in any of the above-mentioned embodiments of the method are implemented, such as steps S101 to S103 shown in FIG. 1. Alternatively, when the processor 40 executes the computer program 42, the functions of each module/unit in the above-mentioned apparatus are implemented, such as the functions of modules 31 to 33 shown in FIG. 3.

Exemplarily, the computer program 42 may be divided into one or more modules/units, which are stored in the memory 41 and executed by the processor 40 to implement the present invention. The one or more modules/units may be a series of computer program 42 instruction segments capable of implementing specific functions, which are used to describe the execution process of the computer program 42 in the vehicle 4.

The present invention further provides a computer-readable storage medium, which stores a computer program 42. When executed by the processor 40, the computer program 42 causes the processor 40 to implement the steps in the above-mentioned methods.

The present invention may also be implemented as a computer program product. When the computer program product runs on a mobile terminal, the mobile terminal can implement the steps in the above-mentioned method embodiments when executing the computer program product.

If the integrated unit is implemented in the form of a software functional unit and sold or used as an independent product, it may be stored in a computer-readable storage medium. Based on this understanding, the present application implements all or part of the processes in the above-mentioned embodiment method, which can be completed by instructing the relevant hardware through a computer program 42. The computer program 42 may be stored in a computer-readable storage medium. When executed by the processor 40, the computer program 42 executes the steps of the above-mentioned various method embodiments. The computer program 42 includes computer program code, which can be in source code form, object code form, executable file, or some intermediate form. The computer-readable medium can at least include: any entity or device that can carry the computer program code to the terminal device, a recording medium, a computer memory, a read-only memory (ROM), a random access memory (RAM), an electric carrier signal, a telecommunication signal and a software distribution medium. For example, a USB flash drive, a mobile hard disk, a magnetic disk, or an optical disk. In some jurisdictions, according to legislation and patent practice, computer-readable media cannot be electric carrier signals and telecommunication signals.

In the above embodiments, the description of each embodiment has its own focus. For parts that are not described or recorded in detail in a certain embodiment, reference can be made to the relevant descriptions of other embodiments.

Those of ordinary skill in the art will appreciate that the units and algorithm steps of each example described in conjunction with the embodiments disclosed herein can be implemented in electronic hardware, or a combination of computer software and electronic hardware. Whether these functions are performed in hardware or software depends on the specific application and design constraints of the technical solution. The skilled person can use different methods to implement the described functions for each specific application, but such implementation should not be considered to be beyond the scope of this application.

In the embodiments provided in the present application, it should be understood that the disclosed devices/network equipment and methods can be implemented in other ways. For example, the device/network equipment embodiments described above are merely schematic. For example, the division of the modules or units is only a logical function division. There may be other division methods in actual implementation, such as multiple units or components can be combined or integrated into another system, or some features can be ignored or not executed. Another point is that the mutual coupling or direct coupling or communication connection shown or discussed can be through some interfaces, indirect coupling, or communication connection of devices or units, which can be electrical, mechanical, or other forms.

The units described as separate components may or may not be physically separated, and the components shown as units may or may not be physical units, that is, they may be located in one place or distributed on multiple network units. Some or all of the units may be selected according to actual needs to achieve the purpose of the solution of this embodiment.

## Claims

1. A driver-assistance control method for a vehicle (4), performed by a vehicle control system for showing, during driving, when the driver is tired and needs to take a rest, a recommended parking location for the driver to rest, the method comprising:
(S101) determining, when receiving a rest instruction, indicating that the driver needs to take a rest, a target parking position based on data from a navigation system on the vehicle;
**characterized by** the method further comprising:
(S102) counting, within a first preset time, the number of vehicles passing the target parking position when a distance between the vehicle (4) and the target parking position is less than a preset distance; and
(S103) controlling the vehicle (4) to enter a driver rest mode when the number of vehicles passing the target parking position within the first preset time is less than a first preset value and the vehicle (4) is parked at the target parking position for the driver to rest.

2. The method according to claim 1, wherein the method further comprises:
re-determining a target parking position according to the data from the navigation system on the vehicle (4) when the number of vehicles passing the target parking position within the first preset time is greater than or equal to the first preset value.

3. The method according to claim 2, wherein the method further comprises:
sending an alarm message to remind the driver to change a parking position when the number of vehicles passing the target parking position within the first preset time is greater than or equal to the first preset value.

4. The method according to claim 1, wherein the method further comprises:
(S104) counting the number of times that a noise level at the target parking position is greater than a preset decibel within a second preset time after the vehicle (4) is parked at the target parking position; and
(S105) controlling the vehicle (4) to enter the driver rest mode when the number of times that the noise level at the target parking position is greater than the preset decibel within the second preset time is less than a second preset value, and the number of vehicles passing the target parking position within the first preset time is less than the first preset value.

5. The method according to claim 4, wherein the method further comprises:
re-determining a target parking position according to the data from the navigation system on the vehicle (4) when the number of times that the noise level at the target parking position is greater than the preset decibel within the second preset time is greater than or equal to the second preset value.

6. The method according to any one of claims 1 to 5, wherein the step of (S103) controlling the vehicle (4) to enter a driver rest mode comprises:
(S1031) acquiring a temperature, a humidity and an oxygen concentration in a vehicle compartment; and
(S1032) controlling an air-conditioning system to operate according to the temperature, the humidity and the oxygen concentration, so that the temperature is within a preset temperature range, the humidity is within a preset humidity range, and the oxygen concentration is within a preset concentration range.

7. The method according to claim 6, wherein the step of (S103) controlling the vehicle (4) to enter a driver rest mode further comprises:
(S1033) acquiring image information, speed information, and movement direction information of an object around the vehicle;
(S1034) determining, based on the image information, the speed information, and the movement direction information, whether the object has a risk of colliding with the vehicle; and
sending an alarm message when the object is determined to have the risk of colliding with the vehicle.

8. The method according to any one of claims 1 to 5, wherein, after the vehicle (4) is parked at the target parking position, the method further comprises:
(S106) obtaining a preset sleep time;
(S107) timing, when the vehicle (4) enters the driver rest mode, the duration of the vehicle (4) being in the driver rest mode; and
(S108) sending a wake-up message to wake up the driver when the duration of the vehicle (4) being in the driver rest mode reaches the preset sleep time.

9. The method according to any one of claims 1 to 5, wherein, after the vehicle (4) enters the driver rest mode, the method further comprises:
sending vehicle location information and vehicle status information to a preset contact.

10. A driver-assistance control apparatus for a vehicle, for showing, during driving, when the driver is tired and needs to take a rest, a recommended parking location for the driver to rest, the apparatus comprising:
a target parking position determination module (31), configured to determine a target parking position according to data from a navigation system on the vehicle (4) when a rest instruction indicating that the driver needs to take a rest is received;
**characterized by** the apparatus further comprising:
a first environment detection module (32), configured to count the number of vehicles passing the target parking position within a first preset time when a distance between the vehicle (4) and the target parking position is less than a preset distance; and
a first control module (33), configured to control the vehicle (4) to enter a driver rest mode when the number of vehicles passing the target parking position within the first preset time is less than a first preset value and the vehicle (4) is parked at the target parking position for the driver to rest.

11. A vehicle (4), comprising a memory (41), a processor (40), and a computer program (42) stored in the memory (41) and executable on the processor (40), wherein when executed by the processor (40), the computer program (42) causes the processor (40) to implement the driver-assistance control method for a vehicle (4) according to any one of claims 1 to 9.

12. A computer-readable storage medium storing a computer program (42), wherein when executed by a processor (40), the computer program (42) causes the processor (40) to implement the driver-assistance control method for a vehicle (4) according to any one of claims 1 to 9.

## Patentansprüche

1. Fahrerassistenz-Steuerungsverfahren für ein Fahrzeug (4), durchgeführt durch ein Fahrzeugsteuersystem zum Anzeigen während der Fahrt, wenn der Fahrer müde ist und eine Ruhepause einlegen muss, einer empfohlenen Parkposition für die Ruhepause des Fahrers, wobei das Verfahren aufweist:
(S101) Bestimmen einer Zielparkposition auf der Grundlage von Daten eines Navigationssystems des Fahrzeugs, wenn eine Ruheanweisung empfangen wird, die anzeigt, dass der Fahrer eine Ruhepause einlegen muss;
**dadurch gekennzeichnet, dass** das Verfahren ferner aufweist:
(S102) Zählen, innerhalb einer ersten voreingestellten Zeit, der Anzahl von Fahrzeugen, die die Zielparkposition passieren, wenn ein Abstand zwischen dem Fahrzeug (4) und der Zielparkposition kleiner als ein voreingestellter Abstand ist; und
(S103) Steuern des Fahrzeugs (4) zum Eintritt in einen Fahrerruhemodus, wenn die Anzahl der Fahrzeuge, die die Zielparkposition innerhalb der ersten voreingestellten Zeit passieren, kleiner als ein erster voreingestellter Wert ist und das Fahrzeug (4) an der Zielparkposition für die Ruhepause des Fahrers geparkt ist.

2. Verfahren nach Anspruch 1, wobei das Verfahren ferner aufweist:
erneutes Bestimmen einer Zielparkposition gemäß den Daten des Navigationssystems des Fahrzeugs (4), wenn die Anzahl der Fahrzeuge, die die Zielparkposition innerhalb der ersten voreingestellten Zeit passieren, größer als oder gleich dem ersten voreingestellten Wert ist.

3. Verfahren nach Anspruch 2, wobei das Verfahren ferner aufweist:
Senden einer Alarmmeldung zum Erinnern des Fahrers, die Parkposition zu wechseln, wenn die Anzahl der Fahrzeuge, die die Zielparkposition innerhalb der ersten voreingestellten Zeit passieren, größer als oder gleich dem ersten voreingestellten Wert ist.

4. Verfahren nach Anspruch 1, wobei das Verfahren ferner aufweist:
(S104) Zählen der Anzahl von Zeitpunkten, zu denen ein Geräuschpegel an der Zielparkposition innerhalb einer zweiten voreingestellten Zeit nach dem Parken des Fahrzeugs (4) an der Zielparkposition größer als ein voreingestellter Dezibel-Wert ist; und
(S105) Steuern des Fahrzeugs (4) zum Eintritt in den Fahrerruhemodus, wenn die Anzahl der Zeitpunkte, zu denen der Geräuschpegel an der Zielparkposition innerhalb der zweiten voreingestellten Zeit größer als der voreingestellte Dezibel-Wert ist, kleiner als ein zweiter voreingestellter Wert ist, und die Anzahl der Fahrzeuge, die die Zielparkposition innerhalb der ersten voreingestellten Zeit passieren, kleiner als der erste voreingestellte Wert ist.

5. Verfahren nach Anspruch 4, wobei das Verfahren ferner aufweist:
erneutes Bestimmen einer Zielparkposition gemäß den Daten des Navigationssystems des Fahrzeugs (4), wenn die Anzahl der Zeitpunkte, zu denen der Geräuschpegel an der Zielparkposition innerhalb der zweiten voreingestellten Zeit größer als der voreingestellte Dezibel-Wert ist, größer als oder gleich dem zweiten voreingestellten Wert ist.

6. Verfahren nach einem der Ansprüche 1 bis 5, wobei der Schritt (S103) des Steuerns des Fahrzeugs (4) zum Eintritt in einen Fahrerruhemodus aufweist:
(S1031) Erfassen einer Temperatur, einer Luftfeuchtigkeit und einer Sauerstoffkonzentration in einem Fahrzeuginnenraum; und
(S1032) Steuern eines Klimatisierungssystems zum Betrieb gemäß der Temperatur, der Luftfeuchtigkeit und der Sauerstoffkonzentration, sodass die Temperatur innerhalb eines voreingestellten Temperaturbereichs liegt, die Luftfeuchtigkeit innerhalb eines voreingestellten Feuchtigkeitsbereichs liegt und die Sauerstoffkonzentration innerhalb eines voreingestellten Konzentrationsbereichs liegt.

7. Verfahren nach Anspruch 6, wobei der Schritt (S103) des Steuerns des Fahrzeugs (4) zum Eintritt in einen Fahrerruhemodus ferner aufweist:
(S1033) Erfassen von Bildinformationen, Geschwindigkeitsinformationen und Bewegungsrichtungsinformationen eines Objekts in der Umgebung des Fahrzeugs;
(S1034) Bestimmen, auf der Grundlage der Bildinformationen, der Geschwindigkeitsinformationen und der Bewegungsrichtungsinformationen, ob für das Objekt ein Risiko einer Kollision mit dem Fahrzeug besteht; und
Senden einer Alarmmeldung, wenn bestimmt wird, dass für das Objekt das Risiko einer Kollision mit dem Fahrzeug besteht.

8. Verfahren nach einem der Ansprüche 1 bis 5, wobei das Verfahren, nachdem das Fahrzeug (4) an der Zielparkposition geparkt ist, ferner aufweist:
(S106) Erhalten einer voreingestellten Schlafzeit;
(S107) Zeitmessen, wenn das Fahrzeug (4) in den Fahrerruhemodus eintritt, der Dauer, während der sich das Fahrzeug (4) im Fahrerruhemodus befindet; und
(S108) Senden einer Weckmeldung zum Aufwecken des Fahrers, wenn die Dauer, während der sich das Fahrzeug (4) im Fahrerruhemodus befindet, die voreingestellte Schlafzeit erreicht.

9. Verfahren nach einem der Ansprüche 1 bis 5, wobei das Verfahren, nachdem das Fahrzeug (4) in den Fahrerruhemodus eingetreten ist, ferner aufweist:
Senden von Fahrzeugpositionsinformationen und Fahrzeugstatusinformationen an einen voreingestellten Kontakt

10. Fahrerassistenz-Steuerungsvorrichtung für ein Fahrzeug, zum Anzeigen während der Fahrt, wenn der Fahrer müde ist und eine Ruhepause einlegen muss, einer empfohlenen Parkposition für die Ruhepause des Fahrers, wobei die Vorrichtung aufweist:
ein Zielparkpositionsbestimmungsmodul (31), eingerichtet zum Bestimmen einer Zielparkposition gemäß Daten eines Navigationssystems des Fahrzeugs (4), wenn eine Ruheanweisung empfangen wird, die anzeigt, dass der Fahrer eine Ruhepause einlegen muss;
**dadurch gekennzeichnet, dass** die Vorrichtung ferner aufweist:
ein erstes Umwelterfassungsmodul (32), eingerichtet zum Zählen der Anzahl von Fahrzeugen, die die Zielparkposition innerhalb einer ersten voreingestellten Zeit passieren, wenn ein Abstand zwischen dem Fahrzeug (4) und der Zielparkposition kleiner als ein voreingestellter Abstand ist; und
ein erstes Steuermodul (33), eingerichtet zum Steuern des Fahrzeugs (4) zum Eintritt in einen Fahrerruhemodus, wenn die Anzahl der Fahrzeuge, die die Zielparkposition innerhalb der ersten voreingestellten Zeit passieren, kleiner als ein erster voreingestellter Wert ist und das Fahrzeug (4) an der Zielparkposition für die Ruhepause des Fahrers geparkt ist.

11. Fahrzeug (4), aufweisend einen Speicher (41), einen Prozessor (40) und ein Computerprogramm (42), das im Speicher (41) gespeichert und auf dem Prozessor (40) ausführbar ist, wobei das Computerprogramm (42), wenn es von dem Prozessor (40) ausgeführt wird, den Prozessor (40) dazu veranlasst, das Fahrerassistenz-Steuerungsverfahren für ein Fahrzeug (4) nach einem der Ansprüche 1 bis 9 zu implementieren.

12. Computerlesbares Speichermedium, das ein Computerprogramm (42) speichert, wobei das Computerprogramm (42), wenn es von einem Prozessor (40) ausgeführt wird, den Prozessor (40) dazu veranlasst, das Fahrerassistenz-Steuerungsverfahren für ein Fahrzeug (4) nach einem der Ansprüche 1 bis 9 zu implementieren.

## Revendications

1. Procédé de commande d'assistance au conducteur pour un véhicule (4), réalisé par un système de commande de véhicule pour présenter, pendant la conduite, lorsque le conducteur est fatigué et qu'il a besoin de se reposer, un lieu de stationnement recommandé pour que le conducteur se repose, le procédé comprenant :
(S101) la détermination, lors de la réception d'une instruction de repos qui indique que le conducteur a besoin de se reposer, d'une position de stationnement cible sur la base de données en provenance d'un système de navigation sur le véhicule ;
**caractérisé en ce que** le procédé comprend en outre :
(S102) le comptage, à l'intérieur d'un premier temps prédéfini, du nombre de véhicules qui passent au niveau de la position de stationnement cible lorsqu'une distance entre le véhicule (4) et la position de stationnement cible est inférieure à une distance prédéfinie ; et
(S103) la commande du véhicule (4) pour qu'il entre dans un mode de repos de conducteur lorsque le nombre de véhicules qui passent au niveau de la position de stationnement cible à l'intérieur du premier temps prédéfini est inférieur à une première valeur prédéfinie et que le véhicule (4) est stationné à la position de stationnement cible pour que le conducteur se repose.

2. Procédé selon la revendication 1, dans lequel le procédé comprend en outre :
la détermination à nouveau d'une position de stationnement cible conformément aux données en provenance du système de navigation sur le véhicule (4) lorsque le nombre de véhicules qui passent au niveau de la position de stationnement cible à l'intérieur du premier temps prédéfini est supérieur ou égal à la première valeur prédéfinie.

3. Procédé selon la revendication 2, dans lequel le procédé comprend en outre :
l'envoi d'un message d'alarme pour rappeler au conducteur de changer de position de stationnement lorsque le nombre de véhicules qui passent au niveau de la position de stationnement cible à l'intérieur du premier temps prédéfini est supérieur ou égal à la première valeur prédéfinie.

4. Procédé selon la revendication 1, dans lequel le procédé comprend en outre :
(S104) le comptage du nombre de fois où un niveau de bruit au niveau de la position de stationnement cible est supérieur à un nombre de décibels prédéfini à l'intérieur d'un second temps prédéfini après que le véhicule (4) a été stationné au niveau de la position de stationnement cible ; et
(S105) la commande du véhicule (4) pour qu'il entre dans le mode de repos de conducteur lorsque le nombre de fois où le niveau de bruit au niveau de la position de stationnement cible est supérieur au nombre de décibels prédéfini à l'intérieur du second temps prédéfini est inférieur à une seconde valeur prédéfinie et que le nombre de véhicules qui passent au niveau de la position de stationnement cible à l'intérieur du premier temps prédéfini est inférieur à la première valeur prédéfinie.

5. Procédé selon la revendication 4, dans lequel le procédé comprend en outre :
la détermination à nouveau d'une position de stationnement cible conformément aux données en provenance du système de navigation sur le véhicule (4) lorsque le nombre de fois où le niveau de bruit au niveau de la position de stationnement cible est supérieur au nombre de décibels prédéfini à l'intérieur du second temps prédéfini est supérieur ou égal à la seconde valeur prédéfinie.

6. Procédé selon l'une quelconque des revendications 1 à 5, dans lequel l'étape (S103) de commande du véhicule (4) pour qu'il entre dans un mode de repos de conducteur comprend :
(S1031) l'acquisition d'une température, d'une humidité et d'une concentration en oxygène dans un habitacle de véhicule ; et
(S1032) la commande d'un système de climatisation pour qu'il fonctionne conformément à la température, à l'humidité et à la concentration en oxygène de telle sorte que la température soit à l'intérieur d'une plage de température prédéfinie, que l'humidité soit à l'intérieur d'une plage d'humidité prédéfinie et que la concentration en oxygène soit à l'intérieur d'une plage de concentration prédéfinie.

7. Procédé selon la revendication 6, dans lequel l'étape (S103) de commande du véhicule (4) pour qu'il entre dans un mode de repos de conducteur comprend en outre :
(S1033) l'acquisition d'une information d'image(s), d'une information de vitesse et d'une information de direction de mouvement d'un objet à proximité du véhicule ;
(S1034) la détermination, sur la base de l'information d'image(s), de l'information de vitesse et de l'information de direction de mouvement, de si l'objet présente ou non un risque de collision avec le véhicule ; et
l'envoi d'un message d'alarme lorsque l'objet est déterminé comme présentant le risque de collision avec le véhicule.

8. Procédé selon l'une quelconque des revendications 1 à 5, dans lequel, après que le véhicule (4) a été stationné au niveau de la position de stationnement cible, le procédé comprend en outre :
(S106) l'obtention d'un temps de sommeil prédéfini ;
(S107) le chronométrage, lorsque le véhicule (4) entre dans le mode de repos de conducteur, de la durée pendant laquelle le véhicule (4) est dans le mode de repos de conducteur ; et
(S108) l'envoi d'un message de réveil pour réveiller le conducteur lorsque la durée pendant laquelle le véhicule (4) est dans le mode de repos de conducteur atteint le temps de sommeil prédéfini.

9. Procédé selon l'une quelconque des revendications 1 à 5, dans lequel, après que le véhicule (4) est entré dans le mode de repos de conducteur, le procédé comprend en outre :
l'envoi d'une information de lieu de véhicule et d'une information d'état de véhicule à un contact prédéfini.

10. Appareil de commande d'assistance au conducteur pour un véhicule, pour présenter, pendant la conduite, lorsque le conducteur est fatigué et qu'il a besoin de se reposer, un lieu de stationnement recommandé pour que le conducteur se repose, l'appareil comprenant :
un module de détermination de position de stationnement cible (31), configuré pour déterminer une position de stationnement cible conformément à des données en provenance d'un système de navigation sur le véhicule (4) lorsqu'une instruction de repos qui indique que le conducteur a besoin de se reposer est reçue ;
**caractérisé en ce que** l'appareil comprend en outre :
un premier module de détection d'environnement (32), configuré pour compter le nombre de véhicules qui passent au niveau de la position de stationnement cible à l'intérieur d'un premier temps prédéfini lorsqu'une distance entre le véhicule (4) et la position de stationnement cible est inférieure à une distance prédéfinie ; et
un premier module de commande (33), configuré pour commander le véhicule (4) pour qu'il entre dans un mode de repos de conducteur lorsque le nombre de véhicules qui passent au niveau de la position de stationnement cible à l'intérieur du premier temps prédéfini est inférieur à une première valeur prédéfinie et que le véhicule (4) est stationné à la position de stationnement cible pour que le conducteur se repose.

11. Véhicule (4), comprenant une mémoire (41), un processeur (40) et un programme informatique (42) qui est stocké dans la mémoire (41) et qui peut être exécuté sur le processeur (40), dans lequel, lorsqu'il est exécuté par le processeur (40), le programme informatique (42) force le processeur (40) à mettre en œuvre le procédé de commande d'assistance au conducteur pour un véhicule (4) selon l'une quelconque des revendications 1 à 9.

12. Support de stockage lisible par ordinateur qui stocke un programme informatique (42), dans lequel, lorsqu'il est exécuté par un processeur (40), le programme informatique (42) force le processeur (40) à mettre en œuvre le procédé de commande d'assistance au conducteur pour un véhicule (4) selon l'une quelconque des revendications 1 à 9.
